# DEMANDE DE BREVET EUROPEEN

(11) **EP 3 002 503 A2**
(43) Date de publication de la demande: **06.04.2016**
(21) Numéro de dépôt: 15187922.8
(22) Date de dépôt: 01.10.2015
(51) Int. Cl.: F21S 8/10, B60Q 1/30

(54) **DISPOSITIF LUMINEUX DOUBLE FONCTION POUR VÉHICULE AUTOMOBILE, ET FEU, NOTAMMENT ANTIBROUILLARD, MUNI D'UN TEL DISPOSITIF LUMINEUX**

(30) Priorité: 02.10.2014 FR 1459442
(71) Demandeur: VALEO VISION, 93012 Bobigny Cedex (FR)
(72) Inventeur: ALBOU, Pierre, 75013 PARIS (FR); BOINET, Loic, 76240 LE MESNIL ESNARD (FR); SAGNA, Boubacar, 78500 SARTROUVILLE (FR)

(57) **Abrégé**

L'invention concerne un dispositif lumineux à balayage d'un faisceau de lumière, notamment pour véhicule automobile (30), comprenant une face de transmission (3) apte à transmettre des rayons lumineux et au moins une source de lumière apte à émettre des rayons lumineux pour former le faisceau de lumière vers la face de transmission (3). Le dispositif comprend en outre des moyens de balayage configurés pour opérer un balayage de la face de transmission (3) par le faisceau de lumière selon une première direction, les moyens de balayage étant aptes, d'une part, à balayer la face de transmission (3) avec une première amplitude de balayage correspondant à une première zone (10) de la face de transmission (3), et d'autre part à balayer la face de transmission (3) avec au moins une deuxième amplitude de balayage correspondant à une deuxième zone (11) de la face de transmission (3).

## Description

La présente invention concerne un dispositif lumineux double fonction pour véhicule automobile, et un feu, notamment antibrouillard, muni d'un tel dispositif lumineux.

Les feux de véhicule automobile, généralement situés à l'arrière du véhicule, sont des dispositifs lumineux qui comprennent une ou plusieurs sources de lumière et une glace qui ferme le feu. De façon simplifiée, la source lumineuse émet des rayons lumineux pour former un faisceau lumineux qui est dirigé vers la glace afin de produire une plage éclairante qui transmet la lumière à l'extérieur du véhicule. La couleur de la plage éclairante est caractéristique de la fonction ou du type de feu. Ainsi, on sait qu'une plage éclairante de couleur blanche indique que le feu est un feu de marche arrière, qu'une plage éclairante de couleur ambre est un indicateur de direction, et qu'une plage éclairante de couleur rouge est un feu de position arrière ou un feu stop, le feu stop étant d'une luminosité plus intense. Il existe aussi les feux rouges antibrouillard, dont l'intensité est encore plus forte pour être visible dans des conditions climatiques difficiles, telles que du brouillard, des fortes pluies ou des chutes de neige. En plus de la couleur, ces feux doivent répondre à des réglementations d'intensité et de visibilité notamment.

Ainsi, l'arrière d'un véhicule comporte une pluralité de plages éclairantes, chaque plage éclairante ayant une couleur propre à chaque fonction. La source de lumière a une intensité lumineuse choisie par rapport au type de feu. Chacune des plages éclairantes étant en outre produite par au moins une source lumineuse différente, on multiplie le nombre de dispositifs lumineux sur le véhicule. Les sources lumineuses sont par exemple des diodes électroluminescentes.

La configuration et le positionnement des plages éclairantes sont donc limités, certaines configurations de plages éclairantes étant difficiles à obtenir. Par exemple, il est difficile de concevoir une configuration d'une première plage éclairante comprise dans une deuxième plage éclairante d'une fonction différente de la première. En effet, les sources qui illuminent les deux plages éclairantes sont différentes et ne peuvent être disposées correctement pour bien orienter leur faisceau lumineux respectif. En effet, les rayons lumineux d'une des sources lumineuses risquent d'éclairer en partie une autre plage éclairante que celle qui est prévue.

L'invention vise donc à obtenir un dispositif lumineux configuré pour simplifier le nombre de feux lumineux sur un véhicule et d'apporter de nouvelles possibilités de disposition et de design des différents feux.

Pour cela, l'invention concerne un dispositif lumineux à balayage d'un faisceau de lumière, notamment pour véhicule automobile, comprenant une face de transmission apte à transmettre des rayons lumineux et au moins une source de lumière apte à émettre des rayons lumineux pour former le faisceau de lumière vers la face de transmission.

Le dispositif est remarquable en ce qu'il comprend en outre des moyens de balayage configurés pour opérer un balayage de la face de transmission par le faisceau de lumière selon une première direction, les moyens de balayage étant aptes, d'une part, à balayer la face de transmission avec une première amplitude de balayage correspondant à une première zone de la face de transmission, et d'autre part à balayer la face de transmission avec au moins une deuxième amplitude de balayage correspondant à une deuxième zone de la face de transmission.

Ainsi, le dispositif utilise la ou les mêmes sources lumineuses pour éclairer deux zones sur une même face de transmission. Les deux zones peuvent être de couleurs différentes et donc correspondre à des fonctions distinctes. Un seul dispositif est suffisant pour remplir au moins deux fonctions de feux.

En outre, grâce à cette caractéristique, ce dispositif offre des possibilités de création dans la configuration et le positionnement des différentes plages éclairantes entre elles. Les plages éclairantes peuvent même être par exemple en partie superposées.

Selon différents modes de réalisation de l'invention, qui pourront être pris ensemble ou séparément :
- la face de transmission est une face dispersive,
- la deuxième amplitude de balayage est inférieure à la première amplitude de balayage de manière à avoir une deuxième zone plus petite que la première zone,
- la deuxième zone est comprise dans la première zone,
- la source de lumière est apte à fournir à la face de transmission un faisceau de lumière d'intensité moyenne constante,
- les moyens de balayage sont munis d'un micro-miroir mobile configuré pour balayer la face de transmission par le faisceau de lumière selon la première direction,
- les moyens de balayage sont configurés pour opérer un balayage de la face de transmission par le faisceau de lumière selon une deuxième direction sensiblement perpendiculaire à la première direction,
- les moyens de balayage sont munis d'un micro-miroir configuré pour balayer la face de transmission par le faisceau de lumière selon la deuxième direction,
- les moyens de balayage sont munis d'un micro-miroir mobile configuré pour balayer la face de transmission par le faisceau de lumière selon la première direction et la deuxième direction,
- la source de lumière comporte au moins une diode laser,
- la source de lumière comporte au moins une diode électroluminescente,
- ledit dispositif comprend un système optique configuré pour collimater les rayons lumineux provenant de la source de lumière pour former le faisceau lumineux,
- ledit dispositif comprend une glace comportant la face de transmission.

L'invention se rapporte également à un feu comprenant un tel dispositif lumineux à balayage d'un faisceau de lumière.

L'invention se rapporte encore à un système automatique de modification de la fonction d'un feu de véhicule automobile comprenant un feu de véhicule automobile, un détecteur de brouillard et une unité de commande, le détecteur étant relié à l'unité de commande qui commande le dispositif lumineux.

L'invention sera mieux comprise à la lumière de la description suivante qui n'est donnée qu'à titre indicatif et qui n'a pas pour but de la limiter, accompagnée des dessins joints :
- la figure 1 illustrant de façon schématique, une vue en perspective d'un mode de réalisation d'un dispositif selon l'invention,
- la figure 2 illustrant de façon schématique, une vue de dessus du mode de réalisation de la figure 1,
- la figure 3 illustrant de façon schématique, une vue de face d'un éclairage sur la glace,
- la figure 4 illustrant de façon schématique, le balayage d'un faisceau lumineux,
- la figure 5 illustrant de façon schématique, un système automatique de modification de la fonction d'un feu
- la figure 6 illustrant de façon schématique, l'utilisation du dispositif sur un véhicule.

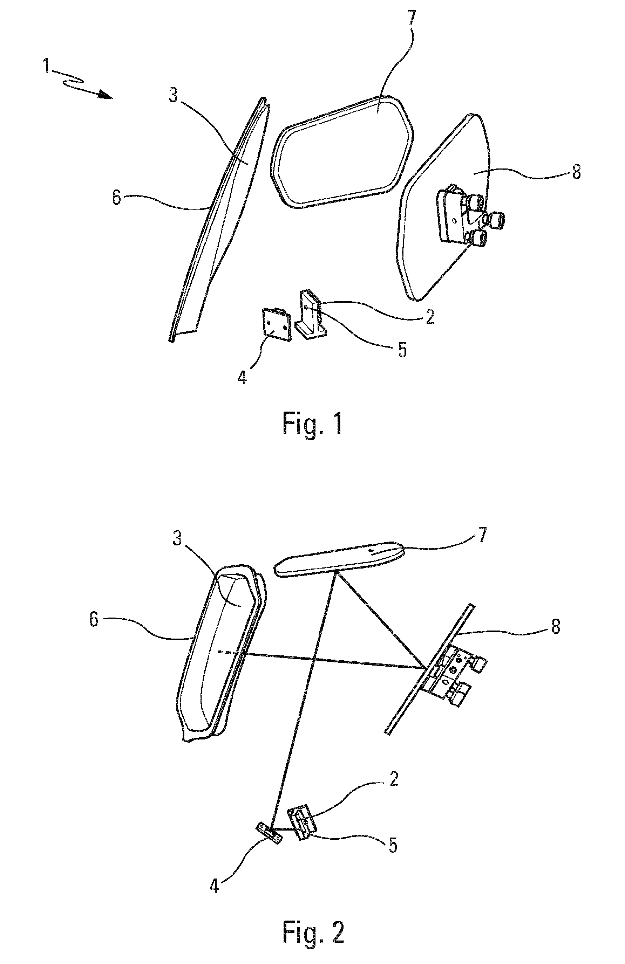

Les figures 1 et 2 représentent un mode de réalisation d'un feu de véhicule automobile, par exemple d'un feu arrière, comprenant un dispositif lumineux 1 à balayage d'un faisceau de lumière selon l'invention. Le dispositif lumineux 1 comprend une source de lumière 2 apte à émettre des rayons lumineux pour former le faisceau de lumière et une face de transmission 3 apte à transmettre les rayons lumineux, qui peut être constituée par exemple par la glace de fermeture du feu. Dans une variante, représentée sur le figure 1, la face 3 de transmission est la face interne de la glace référencée 6. Elle peut aussi être un élément distinct de la glace 6. La source de lumière 2fournit un faisceau de lumière d'intensité moyenne constante dirigé vers la face de transmission 3.

Dans un premier mode de réalisation des figures 1 et 2, la source de lumière 2 est une source laser comprenant par exemple une diode laser, émettant un rayonnement dont la longueur d'onde est choisie pour obtenir la couleur correspondant à la fonction du feu sur la glace 6. Alternativement, on dispose une plaque phosphore sur le trajet du faisceau de lumière, pour transformer la longueur d'onde du rayonnement laser et obtenir la couleur souhaitée. La source de lumière 2 peut aussi comprendre un dispositif optique combinant en un seul faisceau plusieurs rayonnements lasers, par exemple à l'aide de fibres optiques ou de dispositifs tirant profit des polarisations différentes de différentes sources laser.

Dans un second mode de réalisation, non représenté sur les figures, la source de lumière 2 est une ou plusieurs diodes électroluminescentes.

Pour ces deux modes de réalisations, le dispositif 1 est pourvu d'un système optique 5 configuré pour collimater les rayons lumineux provenant de la source de lumière 2 afin de former le faisceau de lumière. Le système optique 5 est par exemple une lentille unique de collimation, et peut aussi comporter un réflecteur.

Selon la source de lumière 2 et le système optique 5 choisis, le faisceau de lumière peut projeter sur la face de transmission 3 une trace lumineuse qui a une forme de point, de tache plus large, voire une marque oblongue.

Pour obtenir un éclairage sensiblement omnidirectionnel en sortie du feu arrière, la face de transmission 3 est constituée par exemple par une face dispersive disposée sur la glace 6 qui ferme le feu. La face dispersive comprend des motifs dispersifs, par exemple des petits tores millimétriques répartis sur la face de transmission. Ainsi, lorsque les rayons lumineux collimatés du faisceau de lumière rencontrent la face de transmission 3 et la traversent, ils sont dispersés sensiblement dans toutes les directions, de manière à remplir les caractéristiques photométriques de la fonction du feu.

Afin qu'une surface plus importante de la glace 6 soit lumineuse, le dispositif 1 comprend des moyens de balayage 4 configurés pour assurer le balayage par le faisceau lumineux de la face de transmission 3. Le balayage est accompli à une vitesse suffisamment grande pour que l'oeil humain ne perçoive pas le déplacement de la marque lumineuse sur la face de transmission 3, et observe un éclairage sensiblement constant et uniforme de la partie balayée de la glace 6.

Pour le mode de réalisation utilisant une source laser, la face de transmission 3 pourra avantageusement être configurée pour avoir une dispersion suffisante du faisceau en cas de disfonctionnement des moyens de balayages. En effet, si le balayage est interrompu, le faisceau laser est figé dans une direction. Il est donc nécessaire d'assurer la sécurité d'un observateur, notamment concernant ses yeux, au moins à partir d'une certaine distance du feu. Avantageusement, la dispersion est suffisante pour assurer cette sécurité, après une quinzaine de centimètres par exemple.

Bien entendu, d'autres moyens de sécurité alternatifs ou complémentaires peuvent être prévus en cas de défaillances de la source laser ou du système de balayage qui générèrent un risque oculaire pour des observateurs du feu.

Le faisceau lumineux provenant de la source de lumière 2 est, avant de frapper la face de transmission 3, renvoyé par les moyens de balayage 4 sur un premier miroir 7 qui le réfléchit vers un deuxième miroir 8. Le deuxième miroir 8 réfléchit à son tour le faisceau lumineux vers la face de transmission 3 de la glace 6 du feu. Les deux miroirs 7, 8 servent à replier le chemin optique du faisceau pour permettre d'obtenir un feu compact. La figure 2 représente le dispositif lumineux 1 avec le trajet du faisceau lumineux depuis la source de lumière 2 jusqu'à la glace 6.

Dans la description suivante, le feu est capable de remplir deux fonctions grâce au dispositif 1. La première fonction est un feu de position arrière et la deuxième fonction est un feu antibrouillard.

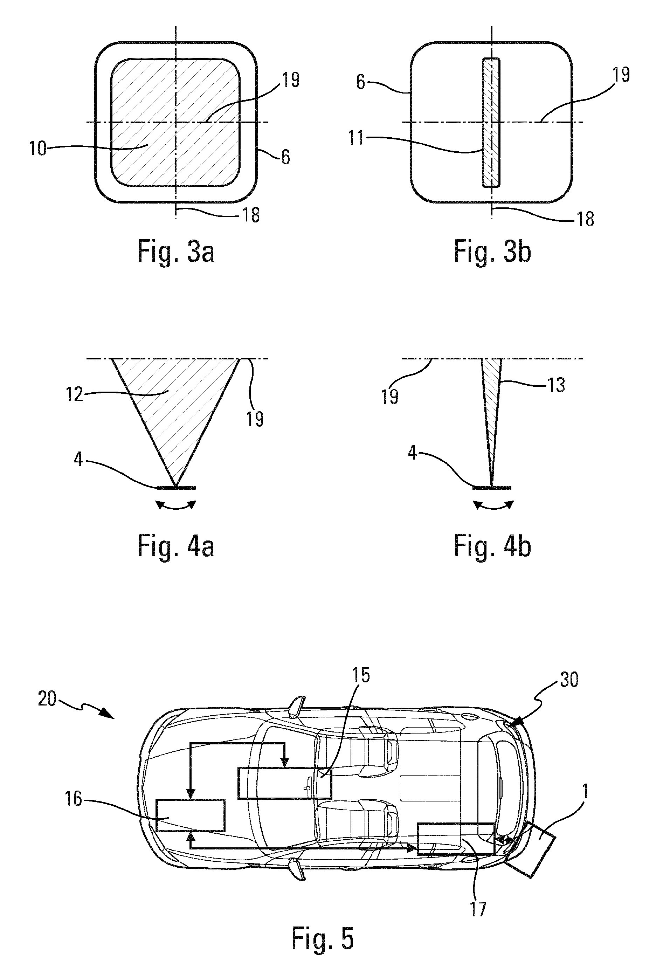

Les moyens de balayage 4 sont munis d'un micro-miroir mobile permettant de balayer le faisceau lumineux par réflexion selon une première direction de la face de transmission 3, qui est par exemple verticale ou horizontale. Le micro-miroir est animé d'un mouvement périodique produit par un actionneur (non représenté). Le mouvement du micro-miroir est opéré autour d'un axe de rotation orthogonal à la première direction afin que la marque lumineuse du faisceau de lumière balaye la face de transmission 3 selon ladite première direction, comme le montre la figure 4.

Ainsi, pour un faisceau lumineux qui produit une marque lumineuse oblongue selon un axe longitudinal 18 de dimension sensiblement égale à la hauteur de la face de transmission, la première direction 19 de balayage est sensiblement perpendiculaire à cet axe longitudinal 18. Les figures 4(a) et 4(b) donnent deux exemples de balayages avec deux amplitudes différentes. Les figures 3(a) et 3(b) montrent les éclairages correspondants sur la glace 6.

Lorsque la marque lumineuse du faisceau lumineux est petite, et a une forme de point lumineux ou de tâche, les moyens de balayage 4 sont également configurés pour balayer le faisceau lumineux sur la face de transmission selon une deuxième direction. La deuxième direction est sensiblement perpendiculaire à la première direction afin de produire un mouvement du faisceau qui se déplace aisément sur la face de transmission 3.

Dans le premier mode de réalisation des figures 1 et 2, le micro-miroir est également configuré pour balayer le faisceau lumineux sur la face de transmission selon la deuxième direction. Autrement dit, c'est le même micro-miroir qui balaye le faisceau lumineux selon les deux directions. Le micro-miroir suit donc un autre mouvement, par exemple de rotation autour d'un deuxième axe de rotation perpendiculaire au précédent. Ainsi, le micro-miroir balaye la marque lumineuse du faisceau lumineux à la fois horizontalement et verticalement sur la face de transmission.

Un second mode de réalisation, non représenté sur les figures, consiste à utiliser un deuxième micro-miroir pour balayer le faisceau lumineux selon la deuxième direction. Ainsi, les moyens de balayage sont munis de deux micro-miroirs disposés l'un à la suite de l'autre sur le chemin optique du faisceau, chacun ayant pour fonction de balayer le faisceau lumineux sur la face de transmission selon une des directions perpendiculaires.

Comme le montre les figures 3 et 4, les moyens de balayage sont aptes, d'une part à balayer la face de transmission avec le faisceau lumineux avec une première amplitude 12 de balayage correspondant à une première zone 10 de la face de transmission 3, et d'autre part à balayer la face de transmission avec au moins une deuxième amplitude 13 de balayage correspondant à une deuxième zone 11 de la face de transmission.

On peut également envisager un nombre plus important de zones d'éclairages différentes, et donc autant d'amplitudes de balayage correspondantes. Dans ce cas, le ou les micro-miroirs sont configurés pour pouvoir balayer le faisceau lumineux avec différentes amplitudes de mouvements.

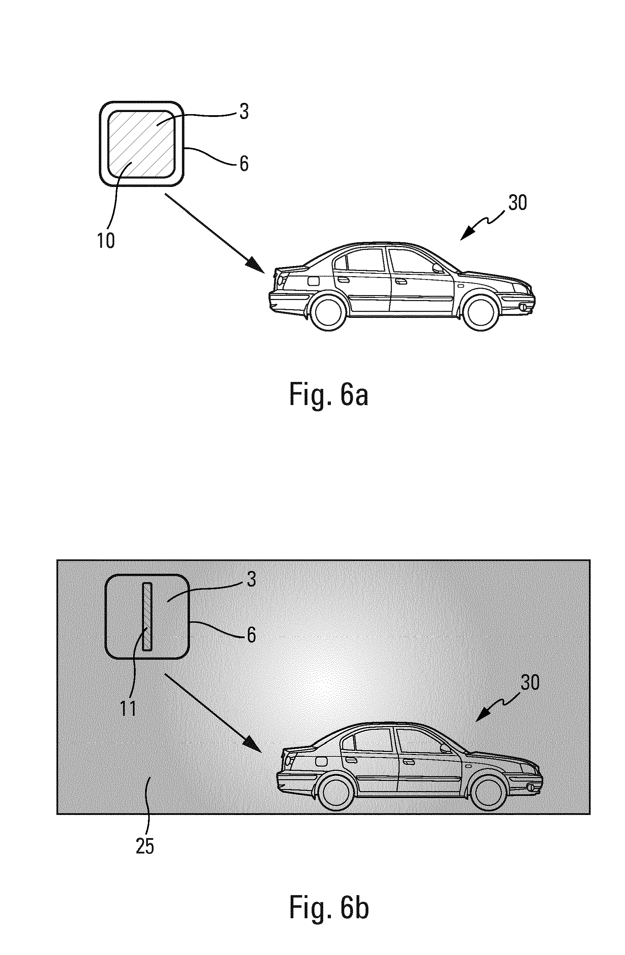

La deuxième amplitude de balayage 13 est inférieure à la première amplitude 12 de balayage de manière à avoir une deuxième zone 11 plus petite que la première zone 10. Ainsi, comme l'intensité de la source est constante, la deuxième zone 11 est d'intensité plus importante que la première zone 10. La première zone 10 sert par exemple de feu de position et la deuxième zone 11 de feu antibrouillard. Comme on le voit sur les figure 6 (a) et (b), le même feu du véhicule automobile 30 est utilisé comme feu de position avec une surface d'éclairage plus importante, lorsque les conditions météorologiques le permettent, et comme feu antibrouillard avec une surface d'éclairage plus intense mais réduite, lorsque les conditions météorologiques sont plus difficiles, avec une pluie intense ou du brouillard 25 par exemple.

En outre, sur les figures 3 et 6, la deuxième zone 11 est comprise dans la première zone 10. Le dispositif permet ainsi de créer des configurations nouvelles de feux arrière. Ici, le feu antibrouillard apparaît au milieu de la zone d'éclairage du feu de position.

Comme illustré à la figure 5, le dispositif 1 est utilisé sur un véhicule 30 dans un système de modification de la fonction d'un feu de véhicule automobile. Ici, le système est automatique. Pour cela, le système est doté d'un détecteur 15 de brouillard, et d'une unité de commande de la fonction du feu. L'unité de commande comprend un calculateur 16 et un contrôleur 17 de mouvement de l'actionneur des moyens de balayage, c'est-à-dire du ou des micro-miroirs.

Le détecteur 15 envoie au calculateur 16 des informations sur la situation météorologique courante pour que celui-ci détermine s'il faut changer la fonction du feu. Si le brouillard apparaît, le calculateur 16 envoie un ordre au contrôleur 17 qui modifie le mouvement du ou des micro-miroirs pour changer le feu de position en feu antibrouillard. Réciproquement, si le brouillard disparaît, le calculateur 15 donne l'ordre au contrôleur 17 de modifier le mouvement du ou des micro-miroirs pour changer le feu antibrouillard en feu de position.

Dans une variante de réalisation, non représentée sur les figures, le système de modification de la fonction du feu est muni d'une commande manuelle actionnable depuis l'habitacle du véhicule par le conducteur. Ici, c'est le conducteur qui choisit quand changer la fonction du feu.

## Revendications

1. Dispositif lumineux (1) à balayage d'un faisceau de lumière, notamment pour véhicule automobile (30), comprenant une face de transmission (3) apte à transmettre des rayons lumineux et au moins une source de lumière (2) apte à émettre des rayons lumineux pour former le faisceau de lumière vers la face de transmission (3), **caractérisé en ce qu'**il comprend en outre des moyens de balayage (4) configurés pour opérer un balayage de la face de transmission (3) par le faisceau de lumière selon une première direction, les moyens de balayage (4) étant aptes, d'une part, à balayer la face de transmission (3) avec une première amplitude de balayage (12) correspondant à une première zone (10) de la face de transmission (3), et d'autre part à balayer la face de transmission (3) avec au moins une deuxième amplitude de balayage (13) correspondant à une deuxième zone (11) de la face de transmission (3).

2. Dispositif selon la revendication 1, **caractérisé en ce que** la face de transmission (3) est une face dispersive.

3. Dispositif selon la revendication 1 ou 2, **caractérisé en ce que** la deuxième amplitude de balayage (13) est inférieure à la première amplitude de balayage (12) de manière à avoir une deuxième zone (11) plus petite que la première zone (10).

4. Dispositif selon la revendication 3, **caractérisé en ce que** la deuxième zone (11) est comprise dans la première zone (10).

5. Dispositif selon l'une quelconque des revendications précédentes, **caractérisé en ce que** la source de lumière (2) est apte à fournir à la face de transmission (3) un faisceau de lumière d'intensité moyenne constante.

6. Dispositif selon l'une quelconque des revendications précédentes, **caractérisé en ce que** les moyens de balayage (4) sont munis d'un micro-miroir mobile configuré pour balayer la face de transmission (3) par le faisceau de lumière selon la première direction.

7. Dispositif selon l'une quelconque des revendications précédentes, **caractérisé en ce que** les moyens de balayage (4) sont configurés pour opérer un balayage de la face de transmission (3) par le faisceau de lumière selon une deuxième direction sensiblement perpendiculaire à la première direction.

8. Dispositif selon la revendication 7, caractérisé en ce les moyens de balayage (4) sont munis d'un micro-miroir configuré pour balayer la face de transmission (3) par le faisceau de lumière selon la deuxième direction.

9. Dispositif selon la revendication 7, **caractérisé en ce que** les moyens de balayage (4) sont munis d'un micro-miroir mobile configuré pour balayer la face de transmission (3) par le faisceau de lumière selon la première direction et la deuxième direction.

10. Dispositif selon l'une quelconque des revendications précédentes, **caractérisé en ce que** la source de lumière (2) comporte au moins une diode laser.

11. Dispositif selon l'une quelconque des revendications précédentes, **caractérisé en ce qu'**il comprend un système optique (5) configuré pour collimater les rayons lumineux provenant de la source de lumière (2) pour former le faisceau de lumière.

12. Dispositif selon l'une quelconque des revendications précédentes, **caractérisé en ce qu'**il comprend une glace (6) comportant la face de transmission (3).

13. Feu de véhicule automobile comprenant un dispositif lumineux (1) à balayage d'un faisceau de lumière selon l'une quelconque des revendications précédentes.

14. Système automatique (20) de modification de la fonction d'un feu de véhicule automobile comprenant un feu de véhicule automobile selon la revendication précédente, un détecteur de brouillard (15) et une unité de commande (16, 17), le détecteur (15) étant relié à l'unité de commande (16, 17) qui commande le dispositif lumineux (1).
